# FASCICULE DE BREVET EUROPEEN

(11) **EP 3 545 641 B1**
(45) Date de publication et mention de la délivrance du brevet: **30.12.2020**
(21) Numéro de dépôt: 17811988.9
(22) Date de dépôt: 15.11.2017
(51) Int. Cl.: H04L 9/08

(54) **PROCÉDÉ DE CHIFFREMENT CHERCHABLE**
SUCHBARES VERSCHLÜSSELUNGSVERFAHREN
SEARCHABLE ENCRYPTION METHOD

(30) Priorité: 28.11.2016 FR 1661597
(43) Date de publication de la demande: 02.10.2019
(73) Titulaire: ORANGE, 75015 Paris (FR)
(72) Inventeur: SANDERS, Olivier, 92326 Châtillon Cedex (FR)
(86) Numéro de dépôt international: PCT/FR2017/053120
(87) Numéro de publication internationale: WO 2018/096237

(56) Documents cités:
- WANG XIAO-FEN ET AL: "Secure Channel Free ID-Based Searchable Encryption for Peer-to-Peer Group", JOURNAL OF COMPUTER SCIENCE AND TECHNOLOGY, SCIENCE PRESS, BEIJING, CN, vol. 31, no. 5, 9 septembre 2016 (2016-09-09), pages 1012-1027, XP036047932, ISSN: 1000-9000, DOI: 10.1007/S11390-016-1676-9 [extrait le 2016-09-09]
- BING WANG ET AL: "Inverted index based multi-keyword public-key searchable encryption with strong privacy guarantee", 2015 IEEE CONFERENCE ON COMPUTER COMMUNICATIONS (INFOCOM), 1 avril 2015 (2015-04-01), pages 2092-2100, XP055392320, DOI: 10.1109/INFOCOM.2015.7218594 ISBN: 978-1-4799-8381-0
- LIMING FANG ET AL: "A Secure Channel Free Public Key Encryption with Keyword Search Scheme without Random Oracle", 12 décembre 2009 (2009-12-12), CRYPTOLOGY AND NETWORK SECURITY, SPRINGER BERLIN HEIDELBERG, BERLIN, HEIDELBERG, PAGE(S) 248 - 258, XP019134678, ISBN: 978-3-642-10432-9 abrégé Section 3.1: "Our Construction"; pages 253-254

## Description

L'invention se rapporte au domaine des télécommunications.

Elle concerne plus particulièrement un système de chiffrement dit « cherchable », c'est-à-dire un système permettant de détecter la présence d'un certain mot dans un chiffré.

Le recours de plus en plus systématique au chiffrement de données pose de réels problèmes dans un monde numérique où le traitement de données est souvent confié à une entité tierce à laquelle on ne souhaite pas accorder un accès en clair aux données. Ce peut être le cas par exemple d'un système de stockage décentralisé de type cloud computing auquel une entreprise peut faire appel pour stocker l'intégralité de ses archives de manière chiffrée. Il se peut alors qu'un utilisateur dans l'entreprise souhaite récupérer, parmi ces données archivées, une donnée en particulier. Le gestionnaire du cloud peut se retrouver incapable de détecter la donnée de l'utilisateur parmi l'ensemble des archives chiffrées et peut donc se retrouver obligé de retourner l'intégralité des archives chiffrées à l'entreprise. Des solutions cryptographiques existent afin d'identifier une donnée particulière dans un ensemble de données chiffrées et éviter ainsi de rapatrier l'intégralité des archives chiffrées.

La solution cryptographique mise en avant dans ce cas est appelée « chiffrement cherchable » (ou « searchable encryption » en anglais). Le chiffrement cherchable permet de détecter si un élément est un chiffré d'un mot-clé, noté W, à condition de détenir une certaine information, appelée habituellement « trappe » et associée préalablement au mot-clé W. Dans ce cas, la donnée qui comprend le mot-clé est chiffrée de manière classique et un chiffrement cherchable est appliqué au mot-clé. Ainsi, dans l'exemple du stockage dans un cloud, l'utilisateur qui souhaite envoyer pour archivage une donnée dans le cloud de manière sécurisée définit un mot-clé qu'il associe à cette donnée. Il chiffre alors classiquement sa donnée et applique un chiffrement cherchable au mot-clé associé puis transmet ces éléments chiffrés au cloud pour archivage. Il peut ensuite demander le rapatriement de la donnée chiffrée archivée, en précisant le mot-clé qu'il lui avait associé.

Il est également possible d'appliquer cette technique de recherche d'informations dans du trafic chiffré. Par exemple, dans le cas d'un système de détection d'intrusions, il est habituel de chercher un virus (ou « malware » en anglais) dans un flux de données en détectant la présence d'une certaine chaîne de caractères, communément appelée « signature », qui constitue alors un mot-clé à rechercher. Cependant, lorsqu'il s'agit d'un flux de données, la notion de mot-clé est difficile à définir. En effet, un flux de données, par exemple un flux Internet, n'a pas réellement de structure : il peut contenir des URL (de l'anglais « Uniform Resource Locator »), du code binaire, etc., dont il est difficile d'extraire des mots-clés. Par ailleurs, s'agissant d'un flux chiffré émis dans un réseau entre deux entités : un émetteur et un récepteur, il est difficile d'appliquer le chiffrement cherchable directement. En effet, l'émetteur en charge de la définition des mots-clés n'a pas connaissance a priori des informations que recherche le récepteur. Ainsi, la définition de mots-clés dans un flux peut s'avérer problématique.

Une solution récemment proposée utilise des algorithmes de chiffrement cherchable pour traiter des flux de données. Cette solution, appelée « BlindBox », consiste à découper la donnée, traitée comme une chaîne de caractères, en sous-chaînes d'une certaine longueur *l* et à faire de ces dernières les mots-clés de la donnée. Par exemple, si *l* = 3 et que l'on considère des chaînes d'octets, la donnée « exemple » est découpée en les sous-chaînes suivantes : « exe », « xem », « emp » et « ple ». Chacune de ces sous-chaînes est alors considérée comme un mot-clé et est chiffrée en utilisant un algorithme de chiffrement cherchable. Cependant, cette solution ne permet de chercher que des mots de taille *l*. Les mots-clés à chercher, par exemple les signatures dans le cas de malware, ont rarement la même taille. Il est alors nécessaire d'ajuster la solution.

Une première solution est de reproduire le découpage et le chiffrement pour chaque taille de mot-clé possible. Cette solution pose des problèmes évidents d'efficacité : elle accroît la complexité du chiffrement et le volume du trafic.

Une deuxième solution consiste à découper si nécessaire les mots-clés à chercher pour les forcer à être de même taille. Si par exemple, il est question d'émettre une trappe pour le mot « execute » et que la longueur des trappes est limitée à trois, alors on associe au mot « execute » les trappes « exe », « cut » et « ute ». L'entité qui génère ces trappes souhaitait que soit identifiée la présence de « exécute » dans le flux chiffré, mais avec cette découpe, tous les exécutables, d'extension « exe » sont détectés. Ici, le nombre de mots-clés est multiplié et l'information révélée peut être plus importante que nécessaire. Par ailleurs, au vu du nombre de mots-clés à chercher, un risque est que l'entité qui effectue la recherche dispose d'une trappe pour presque tous les mots de longueurs trois et qu'elle soit ainsi capable, en utilisant chacune de ces trappes, de déduire l'intégralité de la donnée en clair. Cette solution nuit donc à la sécurité.

X.F Wang et al., "Secure Channel Free ID-Based Searchable Encryption for Peer-to-Peer Group", Journal of Computer Science and Technology 31(5), pages 1012-1027, DOI 10.1007/s11390-016-1676-9 expose un procédé de génération de trappes dans un système de chiffrement cherchable en fonction des paramètres d'un groupe bilinéaire.

B. Wang et al., "Inverted Index Based Multi-Keyword Public-key Searchable Encryption with Strong Privacy Guarantee", 2015 IEEE Conference on Computer Communications (INFOCOM), pages 2092-2099, expose la génération d'une trappe au moyen d'un polynôme (voir en particulier: page 2096, colonne de droite, "TrapdoorGen(MK, Q)"). L. Fang et al., "A Secure Channel Free Public Key Encryption with Keyword Seacrh Scheme without Random Oracle", CANS 2009, LNCS 5888, pages 248-258, expose de l'arrière-plan technique concernant le chiffrement cherchable.

Ces exemples illustrent la complexité du choix de mots-clés pour la mise en œuvre du chiffrement cherchable dans le cas d'un flux de données et pour les procédés qui l'utilisent.

Un des buts de l'invention est de remédier à des insuffisances/inconvénients de l'état de la technique et/ou d'y apporter des améliorations.

A cette fin, l'invention, qui est définie par les revendications ci-jointes, propose un procédé de génération de trappes dans un système de chiffrement cherchable, ledit système définissant une clé secrète et une clé publique, une trappe *V* étant associée à un mot-clé *W* comprenant *l* données élémentaires *w*₁ ... *wₗ*, ladite trappe étant générée par :
- génération de *l* aléas *v*₁, *v*₂*,..., vₗ,*
- génération d'un polynôme *V* en un élément z, fonction de la clé secrète, et de degré *l*, un *j*-ième coefficient dudit polynôme, 1 ≤ *j* ≤ *l*, étant fonction d'un encodage de la *j*-ième donnée élémentaire *wⱼ* du mot-clé défini dans la clé secrète et d'un *j*-ième aléa *vⱼ* des 1-aléas, ladite trappe comprenant ledit polynôme associé à un élément aléatoire d'un groupe *h* d'un environnement bilinéaire, et les *l* aléas associés à l'élément aléatoire du groupe.

Le procédé de chiffrement cherchable, et notamment le procédé de génération de trappes permet d'effectuer la recherche d'un mot-clé de n'importe quelle longueur dans cette chaîne. Ainsi une entité qui effectue la recherche pour un mot-clé associé à la trappe générée obtient non seulement l'information qu'un flux contient le mot-clé comme sous-chaîne mais également la position précise de ce mot-clé dans le flux. Par ailleurs, la taille de la trappe associée au mot-clé est indépendante de la taille du flux à chiffrer et le procédé n'impose aucune contrainte quant à leur taille et leur nombre.

L'invention concerne aussi un procédé de chiffrement cherchable d'un système définissant une clé secrète et une clé publique, un chiffré *C* d'un flux de données *B* qui comprend *n* données élémentaires *b*₁, *b₂,..., bₙ* comprenant :
- génération d'un aléa *a*,
- pour toute donnée élémentaire *bⱼ, j* = 1 à *n*, génération d'un élément fonction de la clé publique *g^{x(bⱼ).z^{j}}* et de l'aléa, ledit élément étant associé à un élément aléatoire d'un groupe *g* d'un environnement bilinéaire, ledit élément associé à l'élément aléatoire du groupe formant une première donnée de chiffrement *C*_{*j*,1}, et génération d'un facteur de décalage *g*^{a.z^{*j*-1}} fonction de l'aléa et de la clé publique, et associé à l'élément aléatoire du groupe, ledit facteur de décalage étant représentatif d'une position dudit monôme dans le flux chiffré *C*, ledit facteur de décalage associé à l'élément aléatoire du groupe formant une deuxième donnée de chiffrement *C*_{*j,*2}*,*
ledit chiffré C du flux de données comprenant pour tout *j* = 1 à *n,* les première et deuxième données de chiffrement.

Le procédé de chiffrement cherchable décrit ici s'effectue en produisant un chiffré de du flux, indépendamment des mots-clés à chercher. Le procédé de chiffrement cherchable s'affranchit de la nécessité de définir des mots-clés pour une donnée à chiffrer. Ainsi, l'entité qui chiffre le flux et qui l'émet n'a pas à se soucier de la définition des mots-clés lors du chiffrement, ni de la taille de ces mots-clés comme c'est actuellement le cas dans les solutions connues. L'absence de telles contraintes permet d'envisager des applications du chiffrement cherchable à des services pour lesquels jusqu'à présent le chiffrement cherchable imposait de fortes contraintes.

Un premier exemple d'application concerne la détection de malwares pour une entreprise, mise en œuvre par une entité tierce. L'entreprise qui reçoit ses flux chiffrés génère les trappes associées à des signatures de malwares fournies par l'entité tierce qui est capable ensuite de détecter ces signatures dans le flux chiffré.

Un deuxième exemple d'application est un service de contrôle parental. Dans le cas d'une diffusion chiffrée de contenus d'un émetteur à une pluralité de récepteurs, chacun des récepteurs peut préciser ses propres mots-clés à une entité agencée pour les détecter dans le flux. Ainsi, un particulier qui reçoit des flux Internet chiffrés définit lui-même les mots-clés qu'il souhaite filtrer.

L'invention porte aussi sur un procédé de détection d'un mot-clé *W* dans un chiffré *C* d'un flux de données *B* dans un système de chiffrement cherchable, ledit système définissant une clé secrète et une clé publique, ledit mot-clé comprenant *l* données élémentaires *w*₁ ... *wₗ*, le procédé comprenant :
- obtention d'une trappe *T* associée au mot-clé, ladite trappe comprenant *l* aléas *h^{vᵢ}* associés à un élément aléatoire *h* d'un groupe d'un environnement bilinéaire, et un polynôme *V* en un élément z, fonction de la clé secrète et de degré *l*, ledit polynôme étant associé à l'élément aléatoire du groupe *h^{V},* un *i*-ième coefficient dudit polynôme, 1 ≤ *i* ≤ *l*, étant fonction d'un encodage de la *i*-ième donnée élémentaire *wᵢ* du mot-clé défini dans la clé secrète et d'un *i-*ième aléa *vᵢ* des *l* aléas,
- à partir d'une position courante *j,* et pour tout *i* = 1 à *l*, couplage du *(j* + i)-ième élément du chiffré et du *i*-ième aléa de la trappe au moyen d'une application bilinéaire *e*, ladite application bilinéaire prenant en entrée un premier élément *g* d'un premier groupe *G*1 et un deuxième élément *h* d'une deuxième groupe *G*2 et à valeurs dans un troisième groupe *GT,* et assemblage des *l* couplages obtenus, ledit assemblage produisant un premier polynôme de degré *l*,
- pour tout *i =* 1 à *l*, couplage du facteur de décalage associé à la position courante et du polynôme *V* associé à la trappe, ledit couplage produisant un deuxième polynôme *U* de degré *l*,
- comparaison des premier et deuxième polynômes, une égalité des deux polynômes étant représentative de la présence du mot-clé W dans le flux à partir de la position courante *j*.

La détection d'un mot-clé, qui consiste à reconstituer un polynôme à partir de données élémentaires successives du flux chiffré et à le comparer à un polynôme correspondant à une trappe associée au mot-clé s'effectue à n'importe quel endroit dans le flux.

L'entité qui met en œuvre le procédé de détection d'un mot-clé n'a aucune information quant au flux en clair hormis la présence éventuelle du mot-clé. Ces trappes sont générées par une entité détentrice de la clé secrète qui les fournit à l'entité de détection. Ainsi, la sécurité est garantie dans la mesure où l'entité qui détecte la présence de mots-clés peut être complètement indépendante de l'entité qui détient la clé secrète du système de chiffrement. En effet, les trappes associées aux mots-clés à identifier dans le flux sont créées par l'entité détentrice de la clé secrète et transmises à l'entité en charge d'intercepter/d'identifier le mot-clé dans le flux chiffré.

L'invention concerne aussi un procédé de déchiffrement d'un chiffré *C* d'un flux de données *B,* ledit flux de données comprenant *n* données élémentaires *b*₁*, b*₂*,* ... , *bₙ*, le chiffré étant généré conformément au procédé de chiffrement cherchable selon la revendication 2, le procédé de déchiffrement comprenant :
- obtention d'une trappe associée à chacune des données élémentaires distinctes du flux de données, ladite trappe étant générée conformément au procédé de génération de trappes tel que décrit précédemment,
- détection de la présence de ladite trappe, conformément au procédé de détection de trappes tel que décrit précédemment.

Le procédé de déchiffrement consiste à générer une trappe pour chaque donnée élémentaire qui constitue le flux. Par exemple, si l'on considère le flux comme une chaîne de bits, les données élémentaires constitutives du flux comprennent les valeurs « 0 » et « 1 ». Si l'on considère le flux comme une chaîne d'octets, les données élémentaires comprennent tous les entiers entre 0 et 255.

L'invention concerne également un dispositif de génération de trappes dans un système de chiffrement cherchable, ledit système définissant une clé secrète et une clé publique, une trappe V étant associée à un mot-clé *W* comprenant *l* données élémentaires *w*₁ ... *wₗ*, ladite entité comprenant :
- des premiers moyens de génération, agencés pour générer *l* aléas *v*₁*,v*₂*,* ... *,vₗ,*
- des deuxièmes moyens de génération, agencés pour générer un polynôme *V* en un élément z, fonction de la clé secrète, et de degré *l*, un *j*-ième coefficient dudit polynôme, 1 ≤ *j* ≤ *l*, étant fonction d'un encodage de la *j*-ième donnée élémentaire *wⱼ* du mot-clé défini dans la clé secrète et d'un *j*-ième aléa *vⱼ* des 1-aléas, ladite trappe comprenant ledit polynôme associé à un élément aléatoire d'un groupe *h* d'un environnement bilinéaire, et les *l* aléas associés à l'élément aléatoire du groupe.

L'invention porte également sur un programme pour une entité de génération de trappes dans un système de chiffrement cherchable, comprenant des instructions de code de programme destinées à commander l'exécution des étapes du procédé de génération de trappes tel que décrit précédemment, lorsque le programme est exécuté sur ladite entité.

L'invention concerne aussi un dispositif de chiffrement cherchable d'un système définissant une clé secrète et une clé publique, un chiffré C d'un flux de données *B* qui comprend *n* données élémentaires *b*₁, *b₂,..., bₙ*, ladite entité comprenant :
- des premiers moyens de génération, agencés pour générer un aléa *a*,
- des deuxièmes moyens de génération, agencés pour générer, pour toute donnée élémentaire *bⱼ, j* = 1 à *n*, un élément fonction de la clé publique *g^{x(bⱼ).z^{j}}* et de l'aléa, ledit élément étant associé à un élément aléatoire *g* d'un groupe d'un environnement bilinéaire, ledit élément associé à l'élément aléatoire du groupe formant une première donnée de chiffrement *Cⱼ*,₁, et génération d'un facteur de décalage *g*^{*a.*z^{*j*-1}} fonction de l'aléa et de la clé publique, et associé à l'élément aléatoire du groupe, ledit facteur de décalage étant représentatif d'une position dudit monôme dans le flux chiffré *C*, ledit facteur de décalage associé à l'élément aléatoire du groupe formant une deuxième donnée de chiffrement *C*_{*j,*2}*,*
ledit chiffré *C* du flux de données comprenant pour tout *j* = 1 à *n,* les première et deuxième données de chiffrement.

L'invention porte également sur un programme pour une entité de chiffrement cherchable, comprenant des instructions de code de programme destinées à commander l'exécution des étapes du procédé de chiffrement cherchable tel que décrit précédemment, lorsque le programme est exécuté sur ladite entité.

L'invention concerne aussi un dispositif de détection d'un mot-clé *W* dans un chiffré *C* d'un flux de données *B* dans un système de chiffrement cherchable, ledit système définissant une clé secrète et une clé publique, ledit mot-clé comprenant *l* données élémentaires *w*₁ ... *wₗ*, ladite entité comprenant :
- des moyens d'obtention, agencés pour obtenir une trappe *T* associée au mot-clé, ladite trappe comprenant *l* aléas *vᵢ* associés à un élément aléatoire *h* d'un groupe d'un environnement bilinéaire, et un polynôme *V* en un élément z, fonction de la clé secrète et de degré *l*, ledit polynôme étant associé à l'élément aléatoire du groupe *h^{V},* un *i*-ième coefficient dudit polynôme, 1 ≤ *i* ≤ *l*, étant fonction d'un chiffré de la *i*-ième donnée élémentaire *wᵢ* du mot-clé défini dans la clé secrète et d'un *i*-ième aléa *vᵢ* des *l* aléas,
- des moyens de couplage et d'assemblage, agencés pour, à partir d'une position courante *j,* et pour tout *i* = 1 à *l*, calculer un couplage du (*j* + *i*)-ième élément du chiffré et du *i*-ième aléa de la trappe au moyen d'une application bilinéaire *e*, ladite application bilinéaire prenant en entrée un premier élément aléatoire *g* d'un premier groupe *G*1 et un deuxième élément aléatoire *h* d'une deuxième groupe *G*2 et à valeurs dans un troisième groupe *GT,* et pour assembler les *l* couplages obtenus, ledit assemblage produisant un premier polynôme de degré *l*,
- des moyens de couplage, agencés pour, pour tout *i =* 1 à *l*, calculer un couplage du facteur de décalage associé à la position courante et du polynôme *V* associé à la trappe, ledit couplage produisant un deuxième polynôme *U* de degré *l*,
- des moyens de comparaison, agencés pour comparer les premier et deuxième polynômes, une égalité des deux polynômes étant représentative de la présence du mot-clé W dans le flux à partir de la position courante *j*.

L'invention porte également sur un programme pour une entité de détection de la présence d'un mot-clé dans un chiffré, comprenant des instructions de code de programme destinées à commander l'exécution des étapes du procédé de détection de la présence d'un mot-clé dans un chiffré tel que décrit précédemment, lorsque le programme est exécuté sur ladite entité.

Enfin, l'invention concerne également un système de chiffrement cherchable comprenant :
- un dispositif de génération de trappes tel que décrit précédemment,
- un dispositif de chiffrement cherchable tel que décrit précédemment, et
- un dispositif de détection de la présence d'un mot-clé dans un chiffré tel que décrit précédemment.

D'autres caractéristiques et avantages de la présente invention seront mieux compris de la description et des dessins annexés parmi lesquels :
- les figures 1a et 1b présentent un système de chiffrement cherchable, selon deux exemples de réalisation ;
- la figure 2 présente les étapes d'un procédé de chiffrement cherchable, selon un exemple de réalisation ;
- la figure 3 présente les étapes d'un procédé de génération de trappes, selon un exemple de réalisation ;
- la figure 4 présente les étapes d'un procédé de détection d'un mot-clé dans un flux, selon un exemple de réalisation ;
- la figure 5 présente les étapes d'un procédé de déchiffrement, selon un exemple de réalisation ;
- la figure 6 est une représentation schématique d'un dispositif de génération de trappes, selon un exemple de réalisation ;
- la figure 7 est une représentation schématique d'un dispositif de chiffrement cherchable, selon un exemple de réalisation ;
- la figure 8 est une représentation schématique d'un dispositif de détection de la présence d'un mot-clé dans un flux, selon un exemple de réalisation.

Un système de chiffrement cherchable, selon un premier exemple de réalisation, va maintenant être décrit en relation avec la figure la.

Un système 100 de chiffrement cherchable, destiné à détecter dans un flux chiffré *C* la présence d'un élément, ou mot-clé *W* comprend une pluralité d'entités. Une entité 10 de chiffrement est agencée pour chiffrer un flux de données *B* à l'attention d'une entité de déchiffrement 11. Le flux de données est par exemple un flux de bits, ou un flux d'octets. L'entité 11 de déchiffrement est agencée pour recevoir le flux *B* chiffré en un flux *C*, et pour le déchiffrer.

Le système 100 de chiffrement cherchable est basé sur un système de cryptographie à clé publique. A cette fin il repose sur une clé secrète *Kₛ* et une clé publique *Kₚ* associée. On suppose qu'une entité 12 de génération de clés est agencée pour générer le couple de clés *Kₛ, Kₚ* pour le système 100 selon une méthode connue.

Une entité de génération de trappes 13 est agencée pour générer, pour un mot-clé *W* à chercher dans le flux *B* chiffré une « trappe » *T* associée. Une trappe *T* est une pièce d'information associée au mot-clé W ; la trappe *T* est agencée pour permettre à une entité de test 14 qui la détient de rechercher la présence du mot-clé W dans le flux chiffré *C*. L'entité de génération de trappes 13 dispose de la clé secrète *Kₛ* générée par l'entité de génération de clés 12. L'entité de génération de trappes 13 est agencée pour transmettre la ou les trappes qu'elle a générées à l'entité de test 14.

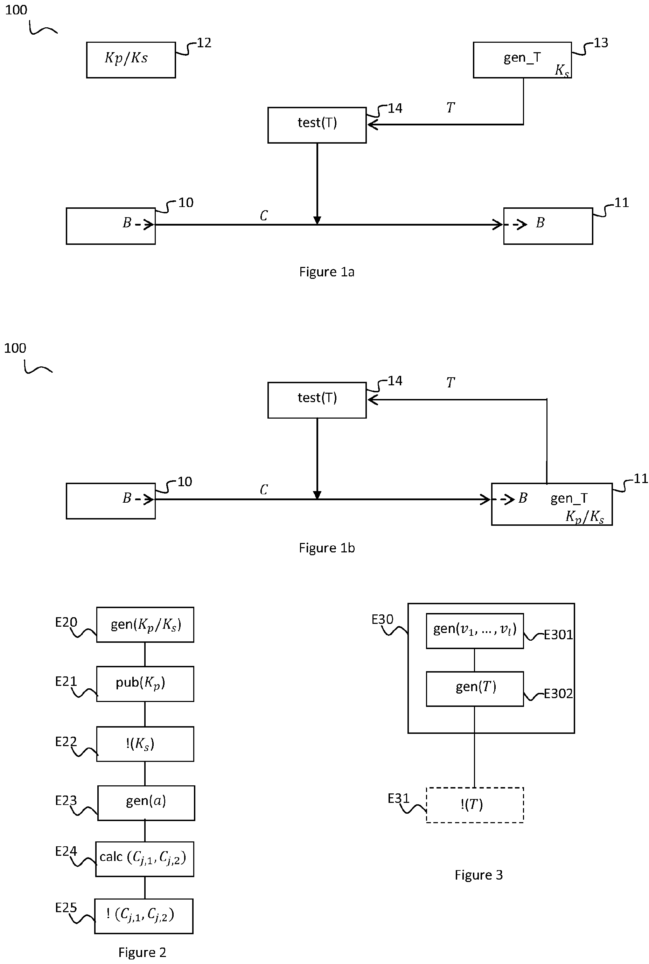

Dans un deuxième exemple de réalisation du système de chiffrement 100, illustré par la figure 1b, l'entité de déchiffrement 11 est agencée pour générer les clés, pour générer les trappes associées aux mots-clés à chercher et pour les transmettre à l'entité de test 14. En d'autres termes, l'entité de déchiffrement 11 met en œuvre les fonctionnalités de l'entité de génération de clés 12 et de l'entité de génération de trappes 13 telles que présentées en relation avec la figure 1a. On comprend que l'exemple de réalisation décrit en relation avec la figure 1b offre une sécurité maximale dans le sens où la clé secrète *Kₛ* du système n'est détenue que par une seule entité, l'entité de déchiffrement 11.

Dans une autre variante (non représentée) l'entité de génération de clés 12 est indépendante de l'entité de déchiffrement 11. Dans ce cas, l'entité de déchiffrement 11 reçoit la clé secrète *Kₛ* de l'entité de génération de clés 12 de manière sécurisée, selon un protocole connu.

Dans un autre exemple de réalisation (non représenté), l'entité de déchiffrement 11 met en œuvre les fonctions de l'entité de test 14 et détecte la présence de mots-clés dans un flux. Une telle architecture est adaptée à une détection de malwares mise en œuvre par une entreprise sur un flux de données chiffré entrant.

Le système de chiffrement cherchable 100 fonctionne dans un environnement bilinéaire qui désigne trois groupes cycliques, habituellement notés *G*1*, G*2 et *GT,* d'ordre premier *p*, ainsi qu'une application bilinéaire *e*, appelée « couplage bilinéaire » prenant en entrée un élément du groupe *G*1 et un élément du groupe *G*2 et à valeurs dans le groupe *GT.*

Ce type d'environnement est fréquemment utilisé en cryptographie et peut-être implémenté très efficacement.

Dans un exemple de de réalisation, on s'intéresse à un environnement bilinéaire asymétrique qui désigne le cas où on ne connaît pas de fonctions efficacement évaluables entre les groupes *G*1 et *G*2*.*

Les étapes d'un procédé de chiffrement cherchable, selon un exemple de réalisation, vont maintenant être décrites en relation avec la figure 2.

Le procédé décrit ici est illustré dans le cas d'un système de chiffrement cherchable 100 tel que représenté en relation avec la figure la. Dans cet exemple, on considère que l'entité de génération de clés 12 du système 100 est distincte de l'entité de déchiffrement 11. De même, on considère que l'entité de génération de trappes 14 est distincte de l'entité de déchiffrement 11. Bien que non optimum en matière de sécurité, ce système permet de distinguer les fonctions de chacune des entités. Une adaptation du procédé à un autre système, par exemple le système 100 décrit en relation avec la figure 1b est immédiate.

L'entité 10 de chiffrement est agencée pour chiffrer un flux de données *B* à l'attention de l'entité de déchiffrement 11. Le flux de données *B* est par exemple un flux de bits, ou un flux d'octets. Dans l'exemple décrit ici on suppose que le flux de données qui est chiffré est un flux de *n*-bits, noté *B = b*₁ *... bₙ.* L'entité de déchiffrement 11 est agencée pour recevoir le flux chiffré, noté *C*, et pour le déchiffrer.

Dans une étape préalable E20 de génération de clés, l'entité de génération de clés 12 génère un couple clés secrète/publique *Kₛ*/*Kₚ* pour le système 100 de chiffrement cherchable. La clé secrète *Kₛ* du système 100 comprend un secret, tel un entier aléatoire z, et un encodage de chacune des valeurs possibles prises par les éléments *bᵢ*, ou données élémentaires. Par exemple, à chaque valeur possible de *bᵢ* est associé un entier aléatoire *xᵢ*. L'encodage de la valeur *bᵢ* est l'entier *xᵢ* et est noté *x*(*bᵢ*) *= xᵢ*. A noter que dans le cas de flux de bits, la clé secrète *Kₛ* comprend deux valeurs d'encodage associées respectivement aux bits 0 et 1. Ainsi, la clé secrète du système 100 comprend, pour toutes les valeurs possibles de *bᵢ* : ${K}_{s} = { \begin{matrix}{x}_{i} = x \left({b}_{i}\right) , \\ z\end{matrix}$

La clé publique associée comprend : ${K}_{p} = { \begin{matrix}{g}^{{z}^{j}} \\ {g}^{\left({x}_{i}, {z}^{j}\right)}\end{matrix}$ avec *g* un élément aléatoire du groupe *G1,* et *j* la taille maximale des flux de données à chiffrer. Par exemple, *j* = 1000, ou *j* = 256, etc. De manière classique, l'exponentiation permet de ne pas pouvoir retrouver les valeurs *z^{j}* et *xᵢ*. *z^{j}* à partir de la clé publique.

A noter que dans un autre exemple de réalisation où le flux serait constitué d'octets, la clé secrète comprendrait un entier aléatoire et l'encodage de 256 valeurs.

Dans une étape suivante E21 de publication, la clé publique *Kₚ* est publiée par l'entité de génération clés 12. La clé secrète *Kₛ* est transmise de manière sécurisée à l'entité de déchiffrement 11 dans une étape E22 d'envoi. A noter que les étapes préalables de génération de clés E20, de publication E21 et d'envoi de la clé secrète E22 sont exécutées à la création du système, pour la génération d'un couple de clés. La clé publique *Kₚ* est utilisé pour tout chiffrement et par toute entité de chiffrement 10 à l'attention de l'entité de déchiffrement 11, jusqu'à révocation ou/et renouvellement du couple de clés.

Dans une étape suivante E23 de génération d'aléa, l'entité de chiffrement 10 génère aléatoirement un entier *a*.

Dans une étape suivante E24 de chiffrement, l'entité de chiffrement 10 procède au chiffrement de la donnée *B* au moyen des éléments de la clé publique *Kₚ.* A cette fin, l'entité de chiffrement 10, calcule pour chaque élément *bⱼ, 1* ≤ *j* ≤ *n* du flux *B* = *b*₁ *... bₙ* à chiffrer une première donnée *Cⱼ*,₁ et une deuxième donnée *Cⱼ*,₂ de chiffrement selon la formule suivante : ${ \begin{matrix}{C}_{j , 1} = {\left({g}^{x \left({b}_{j}\right) . {z}^{j}}\right)}^{a} \\ {C}_{j , 2} = {\left({g}^{{z}^{j - 1}}\right)}^{a}\end{matrix}$

La puissance de la première donnée de chiffrement *Cⱼ,*₁ = {*g*^{*x*(*bⱼ*).*z^{j}*})*^{a}* est un monôme associé au *j*-ième élément du flux *B*.

La deuxième donnée de chiffrement, *Cⱼ*,₂ = (*g*^{*z*^{*j*-1}})*^{a}*, est destinée à tenir compte de la position *j* du bit courant *bⱼ* dans le flux *B* à chiffrer et à prendre en compte ainsi un décalage du bit courant *bⱼ* par rapport au bit initial *b*₁ dans le flux *B.* Ainsi, et selon cette formule, pour le bit *b*₁ de *B*, positionné en première position, il n'y a pas de décalage, l'élément de décalage associé est *g^{a}.* Le bit *b*₂ positionné en deuxième position subit un décalage de 1 par rapport au premier bit *b*₁, l'élément de décalage associé est alors (*g^{z}*)*^{a}* , etc. Les première et deuxième données de chiffrement *C*_{*j,*1}*, Cⱼ*,₂ forment un flux chiffré *C* correspondant au chiffré du flux *B*.

Dans une étape suivante 25 d'envoi, l'entité de chiffrement 10 envoie le flux chiffré *C* à l'entité de déchiffrement 11.

La génération des première et deuxième données de chiffrement est réalisée indépendamment de mots-clés à rechercher dans le flux *B*. Ainsi, il n'est pas nécessaire de définir à priori les mots-clés lors du chiffrement d'un flux, comme c'est le cas avec des solutions connues. Ainsi, le chiffrement cherchable décrit ici offre une souplesse importante qui permet une application à des services de diffusion de flux chiffrés dans lesquels l'entité qui déchiffre définit elle-même les mots-clés qu'elle souhaite identifier dans le flux, sans impliquer l'entité de chiffrement.

Un procédé de génération de trappes, selon un exemple de réalisation, va maintenant être décrit en relation avec la figure 3.

Le procédé de génération de trappes est mis en œuvre par l'entité de génération de trappes 13. A noter que le procédé de génération de trappes est indépendant du procédé de chiffrement et peut être mis en œuvre dès lors que l'entité 13 de génération de trappes possède la clé secrète *Kₛ* et la donnée qu'elle recherche.

Dans une étape initiale E30 de génération d'une trappe, l'entité 13 de génération de trappes, détentrice de la clé secrète *Kₛ*, génère une trappe *T* pour un mot-clé *W.* Le mot-clé *W* est une donnée en clair, ici une chaîne de bits. La trappe *T* qui lui est associée est destinée à être utilisée afin de rechercher la présence du mot-clé *W* dans le flux B, à partir du flux chiffré *C*. Le mot-clé *W* est une suite de bits : *W = w*₁ *... wₗ.* La génération de la trappe *T* associée au mot-clé *W* consiste à générer dans une première sous-étape E301 de génération, *l* entiers aléatoires *vᵢ*, 1 ≤ *i* ≤ *l*, et à générer dans une deuxième sous-étape E302 de génération un polynôme *V* en z de degré *l* dont les coefficients sont de la forme :
*vᵢ,x*(*wᵢ*)*,* où *x*(*wᵢ*) est l'encodage de *wᵢ* tel que défini au cours de l'étape de configuration par la clé secrète *Kₛ*.

Les valeurs aléatoires et le polynôme *V* ne pouvant être révélés, ils sont transmis à l'entité de test 14 en tant que trappe *T* sous la forme d'une exponentiation. Plus précisément, la trappe *T* associée au mot-clé *W* et qui comprend les *l* valeurs aléatoires et le polynôme *V* en z de degré *l* comprend : $T = { \begin{matrix}{h}^{V} = {h}^{{v}_{1} . x \left({w}_{1}\right) . z + {v}_{2} . x \left({w}_{2}\right) . {z}^{2} + ⋯ + {v}_{l} . x \left({w}_{l}\right) . {z}^{l}} \\ {h}^{{v}_{1}} , {h}^{{v}_{2}} , … , {h}^{{v}_{l}} ,\end{matrix}$ où *h* est un élément aléatoire du groupe *G*2*.*

Dans une étape suivante E31 d'envoi, la trappe *T* associée au mot-clé *W* est envoyée à l'entité de test 14, agencée pour détecter la présence du mot-clé *W* auquel lui a été associé la trappe *T* dans le flux *B* à partir du flux chiffré *C*. A noter que dans un exemple de réalisation où l'entité de déchiffrement 11 met en œuvre les fonctions de l'entité de génération de trappes 13 et de l'entité de test 14, cette étape n'est pas exécutée. Elle apparaît en pointillés sur la figure 3.

Le procédé de génération de trappes n'impose aucune contrainte quant à la taille des mots-clés auxquels sont associées les trappes et/ou quant à leur nombre. Par rapport à des solutions connues, cela offre une grande souplesse quant au choix des mots-clés.

Dans une variante de réalisation du procédé de génération de trappes, il est sélectionné au cours de la sous-étape E301 de génération, *l* éléments aléatoires *vᵢ*, 1 ≤ *i* ≤ *l*, d'un sous-ensemble d'entiers. Dans cet exemple, il n'y a pas de contrainte quant à la taille du sous-ensemble dont sont issus les éléments aléatoires. Ainsi, il est possible que certains des éléments *vᵢ* générés dans ce sous-ensemble soient égaux. C'est le cas par exemple lorsque le sous-ensemble est réduit à un élément. En sélectionnant les éléments aléatoires dans un sous-ensemble d'entiers, la phase de détection de trappes dans le chiffré est optimisée ; le temps de détection peut être considérablement réduit, notamment lorsque plusieurs éléments aléatoires sont égaux.

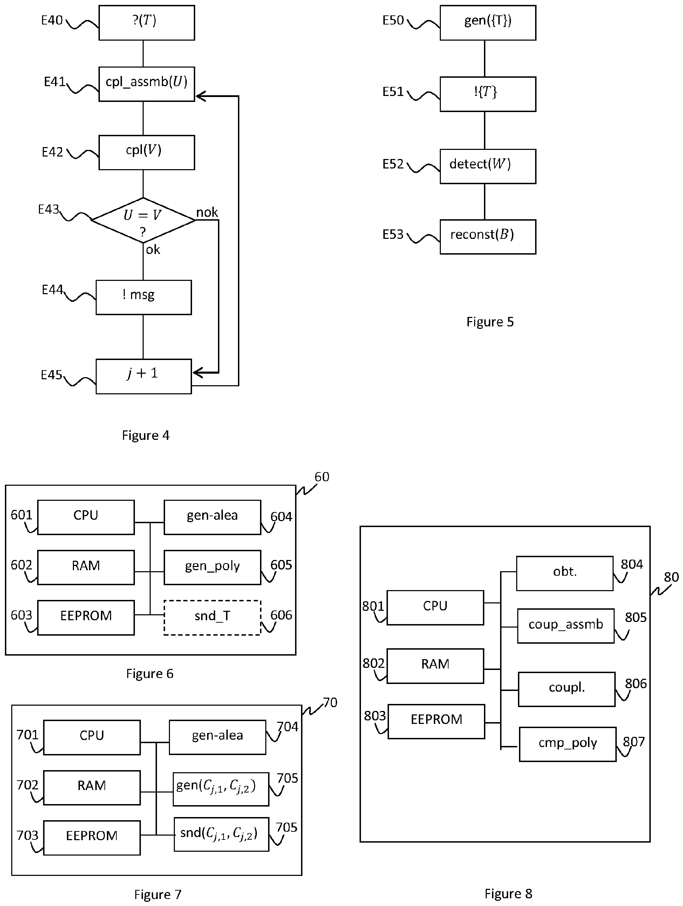

Un procédé de détection d'un mot-clé dans un flux chiffré, selon un exemple de réalisation, va maintenant être décrit en relation avec la figure 4.

Le procédé de détection, mis en œuvre par l'entité de test 14 consiste à rechercher la présence du mot-clé *W* dans le flux *B* à partir du flux chiffré *C*. En effet, c'est le flux chiffré *C* qui est transmis entre l'entité de chiffrement 10 et l'entité de déchiffrement 11 et c'est ce flux chiffré *C* que l'entité de test 14 analyse dans le but de détecter la présence du mot-clé *W.* Plus précisément, il est question de vérifier si une sous-chaîne du flux *B, b*_{*j*+1} *..*. *b*_{*j*+*l*} transmise chiffrée dans le flux *C* est égale au mot-clé *W.* Un objectif informel est de reconstituer un polynôme *U* à partir des premières données de chiffrement *C*ⱼ₊₁,1,..., *C*_{*j+l,*1} du flux *B* et de le comparer au polynôme *V* qui est associé à la trappe *T*. En effet, une propriété mathématique des polynômes est que deux polynômes sont égaux si et seulement si leurs coefficients sont égaux deux à deux. Puisque l'encodage utilisé pour chiffrer le flux *B*, plus précisément les données élémentaires *b*₁ ... *bₙ* du flux *B,* et l'encodage utilisé pour construire la trappe *T,* qui dépend de l'encodage des données élémentaires *w*₁ ... *wₗ* du mot-clé *W,* est le même, alors une égalité des deux polynômes implique nécessairement que les encodages des données élémentaires *b*_{*j*+1} ... *b*_{*j*+*l*} successifs qui figurent dans le polynôme *U* sont égaux aux encodages des données élémentaires *w*₁... *wₗ* du mot-clé *W* utilisés pour générer la trappe *T.* Une telle égalité indique donc que le mot-clé *W* = *w*₁ ... *wₗ* est égal à la sous-chaîne *b*_{*j*+*l*} ... *b*_{*j*+*l*} du flux *B.*

Dans une étape initiale E40 d'obtention, l'entité de test 14 obtient la trappe *T* associée au mot-clé *W.* Dans l'exemple décrit ici, l'entité de test 14 reçoit de l'entité de génération de trappes 13 la trappe *T* associée au mot-clé W. Dans un autre exemple de réalisation dans lequel l'entité de déchiffrement 11 met en œuvre les fonctions de l'entité 13 de génération de trappes et les fonctions de l'entité de test 14, l'entité de déchiffrement 11 obtient la trappe *T* en la générant.

Dans une étape suivante E41 de couplage et d'assemblage d'éléments du chiffré depuis une position courante, l'entité de test 14 assemble *l*-éléments du chiffré depuis une position courante *j* dans le but d'obtenir un polynôme *U.* Ce polynôme est destiné à être comparé au polynôme *V* associé à la trappe *T*. Les premières données de chiffrement étant des exponentiations de monômes, il est calculé le produit des exponentiations des *l*-monômes consécutifs. Par ailleurs, on remarque que des entiers aléatoires *vᵢ* interviennent dans les coefficients du polynôme *V* associé à la trappe *T*. Pour que la comparaison entre les polynômes *U* et *V* ait un sens il faut donc que les entiers *vᵢ* interviennent également dans le polynôme *U* à reconstituer. A cette effet, dans l'étape E41 de couplage et d'assemblage, un couplage est utilisé entre les premières données de chiffrement *C*_{j+1,1} et les paramètres *h^{vᵢ},* compris dans la trappe *T* et il est donc calculé : $\begin{matrix}{\prod }_{i = 1 à l} e \left({C}_{j + i , 1}, {h}^{{v}_{i}}\right) , o ù \prod est le symbole standard pour désigner un produit \\ = e \left({C}_{j + 1,1 ,}{h}^{{v}_{1}}\right) ⋅ e \left({C}_{j + 2,1 ,}{h}^{{v}_{2}}\right) … e \left({C}_{j + l , 1 ,}{h}^{{v}_{l}}\right) \\ = e \left({\left({g}^{x \left({b}_{j + 1}\right) . {z}^{j + 1}}\right)}^{a}, {h}^{{v}_{1}}\right) . e \left({\left({g}^{x \left({b}_{j + 2}\right) . {z}^{j + 2}}\right)}^{a}, {h}^{{v}_{2}}\right) ⋯ e \left({\left({g}^{x \left({b}_{j + l}\right) . {z}^{j + l}}\right)}^{a}, {h}^{{v}_{l}}\right) \\ = e {\left(g, h\right)}^{a . x \left({b}_{j + 1}\right) . {z}^{j + 1} . {v}_{1}} . e {\left(g, h\right)}^{a . x \left({b}_{j + 2}\right) . {z}^{j + 2} .2} … e {\left(g, h\right)}^{a . x \left({b}_{j + l}\right) . {z}^{j + l} . {v}_{l}}\end{matrix}$

En utilisant les propriétés du couplage et après produit, l'exposant de *e*(*g, h*) est un polynôme *U*' tel que : $U ′ = a . {\sum }_{i = 1 à l} x \left({b}_{j + 1}\right) . {v}_{i} . {z}^{j + i}$ $U ′ = a . {z}^{j} . {\sum }_{i = 1 à l} x \left({b}_{j + 1}\right) . {v}_{i} . {z}^{i}$ $U ′ = a . {z}^{j} . U$ où *U* est un polynôme en z de degré *l*.

On remarque qu'une égalité entre la sous-chaîne *b*_{*j*+1} *... b*_{*j*+*l*} et le mot-clé *W* est équivalente à une égalité entre le polynôme *U* et le polynôme V car les encodages impliqués dans le chiffrement du flux *B* et dans la génération de la trappe *T* associée au mot-clé W sont les mêmes.

Pour comparer la sous-chaîne *b*_{*j*+*l*} ... *bⱼ₊ₗ* et le mot-clé *W,* il reste donc à comparer les polynômes *U* et *V,* ce qui est possible grâce au couplage. Ainsi, dans une étape E42 de couplage, il est calculé le couplage de la deuxième donnée de chiffrement *Cj*₊₁,₂ et du premier élément de la trappe *T, h^{V}.* On obtient : $e \left({C}_{j + 1,2}, {h}^{V}\right) = e \left({g}^{a . {z}^{\left(j+1-1\right)}}, {h}^{V}\right) = e {\left(g, h\right)}^{a . {z}^{j} . V}$

La deuxième donnée de chiffrement *C*_{*j*+1,2} est utilisée afin de décaler le polynôme *V*, ou plus précisément de tenir compte de la position courante *j* dans le flux *B* à partir de laquelle la recherche du mot-clé *W* est effectuée. La position courante *j* constitue le décalage qu'il faut prendre en compte. A noter que l'on utilise la deuxième donnée de chiffrement d'indice *j* + 1 car par construction c'est celle qui correspond au monôme *z^{j}* qui figure en position courante.

Dans une étape suivante E43 de test, on vérifie si : $e {\left(g, h\right)}^{a . {z}^{j} . U} = e {\left(g, h\right)}^{a . {z}^{j} . V}$

Dans un premier cas (branche « ok » sur la figure 4) où l'égalité est vérifiée, correspondant au cas où *U = V,* alors cela signifie que la sous-chaîne *b*_{*j*+1} *... bⱼ₊ₗ* est identique au mot-clé *W.* En effet, *U* a la propriété que si *U* = *V* alors *b*_{*j*+*l*} ... *bⱼ₊ₗ* = *W.* Dans un exemple de réalisation, dans une étape suivante E44 d'envoi de message, un message d'information est envoyé à l'entité de déchiffrement 11 afin de l'informer de la présence du mot-clé dans le flux et de la position *j* + 1 dans le flux *B* à laquelle le mot-clé a été trouvé. Dans une étape suivante E45 d'incrément, la position courante *j* est incrémentée d'un pas et la recherche du mot-clé *W* se poursuit à partir de cette nouvelle position courante.

Dans un deuxième cas (branche « nok » sur la figure 4) où l'égalité n'est pas vérifiée, le mot-clé *W* est différent de *bⱼ₊ₗ* ... *bⱼ₊ₗ* car il existe au moins une différence entre les polynômes *U* et *V*. Dans un exemple de réalisation, dans l'étape suivante E45 d'incrément, la position courante *j* est incrémentée d'un pas et la recherche du mot-clé *W* se poursuit à partir de cette nouvelle position courante.

Le procédé permet de détecter la présence de mots-clés de n'importe quelle taille, dans n'importe quel flux chiffré et à n'importe quel emplacement de cette chaîne. La détection d'un mot-clé dans un flux permet non seulement d'être informé de la présence du mot-clé dans la chaîne mais également de connaître l'emplacement exact du mot-clé dans le flux.

Un procédé de déchiffrement, selon un exemple de réalisation, va maintenant être décrit en relation avec la figure 5.

Dans une étape initiale E50 de génération de trappes, l'entité de génération de trappes 13 génère des trappes pour toutes les valeurs possibles de données élémentaires d'un flux *B*. Dans l'exemple décrit ici d'un flux de bits, deux trappes sont générées : une pour un premier mot-clé correspondant au bit 0 et une pour un deuxième mot-clé correspondant au bit 1. A noter que dans le cas d'un flux de bits, la génération d'une seule trappe, associée à l'un des deux mots-clés est suffisante.

Dans une étape suivante E51 d'envoi des trappes, l'entité de génération de trappes 13 envoie les trappes générées précédemment à l'entité de test 14.

Dans une étape suivante E52 de test, mise en œuvre lors de l'envoi d'un flux chiffré *C* de l'entité de chiffrement 10 à l'entité de déchiffrement 11, l'entité de test 14 met en œuvre le procédé de détection d'un mot-clé tel que décrit précédemment pour l'ensemble des trappes qu'il a reçu précédemment. Ainsi, conformément à un exemple de réalisation décrit, l'entité de déchiffrement 11 est informée de la détection de chacun des mots-clés, c'est-à-dire de chacun des bits et de leur position.

Dans une étape suivante E53 de reconstitution, l'entité de déchiffrement 11 qui connaît la position de chacun des mots-clés, en l'espèce les bits 0 et 1, reconstitue le flux en clair. A noter que dans le cas où une seule trappe a été générée, par exemple pour le mot-clé correspondant au bit 0, l'entité de déchiffrement 11 qui reçoit de l'entité de test 14 la position de tous les bits 0 dans le flux B, positionne à 1 les autres bits du flux et reconstitue ainsi le flux initial *B*.

Un dispositif de génération de trappes dans un système de chiffrement cherchable, selon un exemple de réalisation va maintenant être décrit en relation avec la figure 6.

Un dispositif 60 de génération de trappes est un équipement informatique, tel un ordinateur.

Le dispositif 60 de génération de trappes comprend :
- une unité de traitement ou processeur 601, ou "CPU" (de l'anglais "Central Processing Unit"), destinée à charger des instructions en mémoire, à les exécuter, à effectuer des opérations ;
- un ensemble de mémoires, dont une mémoire volatile 602, ou "RAM" (pour "Random Access Memory") utilisée pour exécuter des instructions de code, stocker des variables, etc., et une mémoire de stockage 603 de type « EEPROM » (de l'anglais « Electrically Erasable Programmable Read Only Memory »). En particulier, la mémoire de stockage 603 est agencée pour mémoriser un module logiciel de génération de trappes qui comprend des instructions de code pour mettre en œuvre les étapes du procédé de génération de trappes tel que décrit précédemment. La mémoire de stockage 603 est également agencée pour mémoriser dans une zone sécurisée la clé secrète *Kₛ* du système de chiffrement cherchable.

Le dispositif 60 de génération de trappes comprend également :
- un premier module de génération 604, agencé pour générer, pour une trappe *T* associée à un mot clé *W* qui comprend *l* données élémentaires, *W* = *w*₁*...wₗ, l* aléas *v*₁,*v*₂, ...,*vₗ*. Le premier module de génération 604 est agencé pour mettre en œuvre l'étape E301 du procédé génération de trappes tel que décrit précédemment ;
- un deuxième module de génération 605, agencé pour générer un polynôme *V* en un élément z, fonction de la clé secrète, et de degré *l* dans lequel un *j*-ième coefficient dudit polynôme, 1 ≤ *j* ≤ *l,* est fonction d'un encodage de la *j*-ième donnée élémentaire *wⱼ* du mot-clé défini dans la clé secrète *Kₛ* du système de chiffrement cherchable et d'un *j*-ième aléa *vⱼ* des *l* aléas. Le deuxième module de génération 605 est agencé pour mettre en œuvre l'étape E302 du procédé de génération de trappes tel que décrit précédemment ;
- un module d'envoi 606, optionnel, agencé pour envoyer la trappe *T* qui comprend ledit polynôme *h^{V}* associé à un élément aléatoire *h* d'un groupe d'un environnement bilinéaire, et les *l* aléas *h^{Vⱼ}* associés à l'élément aléatoire du groupe. Le module d'envoi 606 est agencé pour mettre en œuvre l'étape optionnelle E31 du procédé de génération de trappes tel que décrit précédemment. Le module d'envoi 606 apparaît en pointillés sur la figure 6.

Les premier et deuxième modules de génération 604 et 605, et le module d'envoi 606 sont de préférence des modules logiciels comprenant des instructions logicielles pour mettre en œuvre les étapes du procédé de génération de trappes d'un système de chiffrement cherchable tel que décrit précédemment.

L'invention concerne donc aussi :
- un programme d'ordinateur comportant des instructions pour la mise en œuvre du procédé de génération de trappes tel que décrit précédemment lorsque ce programme est exécuté par un processeur du dispositif de génération de trappes,
- un support d'enregistrement lisible sur lequel est enregistré le programme d'ordinateur décrit ci-dessus.

Un dispositif de chiffrement cherchable, selon un exemple de réalisation, va maintenant être décrit en relation avec la figure 7.

Un dispositif 70 de chiffrement cherchable est un équipement informatique, tel un ordinateur.

Le dispositif 70 de chiffrement cherchable comprend :
- une unité de traitement ou processeur 701, ou CPU, destinée à charger des instructions en mémoire, à les exécuter, à effectuer des opérations ;
- un ensemble de mémoires, dont une mémoire volatile 702, ou RAM utilisée pour exécuter des instructions de code, stocker des variables, etc., et une mémoire de stockage 703 de type EEPROM. En particulier, la mémoire de stockage 703 est agencée pour mémoriser un module logiciel de chiffrement cherchable qui comprend des instructions de code pour mettre en œuvre les étapes du procédé de chiffrement cherchable tel que décrit précédemment. La mémoire 703 est également agencée pour mémoriser la clé publique *Kₚ* du système de chiffrement cherchable ;

Le dispositif 70 de chiffrement cherchable comprend également :
- un premier module 704 de génération, agencé pour générer un aléa *a*. Le premier module 704 de génération est agencé pour mettre en œuvre l'étape E23 du procédé de chiffrement cherchable tel que décrit précédemment ;
- un deuxième module 705 de génération, agencé pour générer, pour toute donnée élémentaire *bⱼ, j* = 1 à *n*, du flux *B* à chiffrer, la puissance d'un monôme fonction de la clé publique (*g*^{*x*(*bⱼ*).*z^{J}*}) et de l'aléa, ledit élément étant associé à un élément aléatoire d'un groupe *g* d'un environnement bilinéaire, ledit élément associé à l'élément aléatoire du groupe formant une première donnée de chiffrement (*C*_{*j*,1}). Le deuxième module de génération 705 est également agencé pour générer un facteur de décalage *g*^{*a.z*^{*J*-1}}, fonction de l'aléa et de la clé publique, et associé à l'élément aléatoire du groupe, ledit facteur de décalage étant représentatif d'une position dudit monôme dans le flux chiffré *C*, ledit facteur de décalage associé à l'élément aléatoire du groupe formant une deuxième donnée de chiffrement (*C*_{*j*,2}). Le chiffré *C* du flux de données comprend, pour tout *j =* 1 à *n,* les monômes générés et les facteurs de décalage associés. En d'autres termes, le chiffré comprend les première et deuxième données *Cⱼ*,₁, *Cⱼ*,₂ de chiffrement. Le deuxième module 705 de génération est agencé pour mettre en œuvre l'étape E24 du procédé de chiffrement cherchable tel que décrit précédemment.

Les premier et deuxième modules de génération 704 et 705 sont de préférence des modules logiciels comprenant des instructions logicielles pour mettre en œuvre les étapes du procédé de chiffrement cherchable tel que décrit précédemment.

L'invention concerne donc aussi :
- un programme d'ordinateur comportant des instructions pour la mise en œuvre du procédé de chiffrement cherchable tel que décrit précédemment lorsque ce programme est exécuté par un processeur du dispositif de chiffrement cherchable,
- un support d'enregistrement lisible sur lequel est enregistré le programme d'ordinateur décrit ci-dessus.

Un dispositif de détection d'un mot-clé dans un flux, selon un exemple de réalisation, va maintenant être décrit en relation avec la figure 8.

Un dispositif 80 de détection d'un mot-clé dans un flux est un équipement informatique, tel un ordinateur.

Le dispositif 80 de détection d'un mot-clé dans un flux comprend :
- une unité de traitement ou processeur 801, ou CPU, destinée à charger des instructions en mémoire, à les exécuter, à effectuer des opérations ;
- un ensemble de mémoires, dont une mémoire volatile 802, ou RAM utilisée pour exécuter des instructions de code, stocker des variables, etc., et une mémoire de stockage 803 de type EEPROM. En particulier, la mémoire de stockage 803 est agencée pour mémoriser un module logiciel de détection d'un mot-clé dans un flux qui comprend des instructions de code pour mettre en œuvre les étapes du procédé de chiffrement cherchable tel que décrit précédemment ;

Le dispositif 80 de détection d'un mot-clé dans un flux comprend également :
- un module d'obtention 804, agencé pour obtenir une trappe *T* associée au mot-clé, ladite trappe comprenant *l* aléas *h^{vᵢ}* associés à un élément aléatoire *h* d'un groupe d'un environnement bilinéaire, et un polynôme *V* en un élément z, fonction de la clé secrète et de degré *l*, ledit polynôme étant associé à l'élément aléatoire du groupe *h^{V},* un *i*-ième coefficient dudit polynôme, 1 ≤ *i* ≤ *l*, étant fonction d'un encodage de la *i*-ième donnée élémentaire *wᵢ* du mot-clé défini dans la clé secrète et d'un *i*-ième aléa *vᵢ* des *l* aléas. Dans un exemple de réalisation où le dispositif 80 de détection d'un mot-clé est distinct de l'entité de génération de trappes 13, le module d'obtention 804 reçoit la trappe T du dispositif 13 de génération de trappes. Le module d'obtention 804 est agencé pour mettre en œuvre l'étape E40 du procédé de détection d'un mot-clé tel que décrit précédemment ;
- un module 805 de couplage et d'assemblage, agencé pour, à partir d'une position courante *j,* et pour tout *i* = 1 à *l*, calculer un couplage du (*j* + *i*)-ième élément du chiffré et du *i*-ième aléa de la trappe au moyen d'une application bilinéaire (*e*), ladite application bilinéaire prenant en entrée un premier élément *g* d'un premier groupe *G*1 et un deuxième élément *h* d'une deuxième groupe *G*2 et à valeurs dans un troisième groupe *GT,* et assemblage des *l* couplages obtenus, ledit assemblage produisant un premier polynôme de degré *l*. Le module 805 de couplage et d'assemblage est agencé pour mettre en œuvre l'étape E41 du procédé de détection d'un mot-clé tel que décrit précédemment ;
- un module 806 de couplage, agencé pour, pour tout *i* = 1 à *l*, calculer un couplage du facteur de décalage associé à la position courante et du polynôme V associé à la trappe, ledit couplage produisant un deuxième polynôme *U* de degré *l*. Le module 806 de couplage est agencé pour mettre en œuvre l'étape E42 du procédé de détection d'un mot-clé tel que décrit précédemment ;
- un module 807 de comparaison des premier et deuxième polynômes, agencé pour comparer les premier et deuxième polynômes, une égalité des deux polynômes étant représentative de la présence du mot-clé *W* dans le flux *B* à partir de la position courante *j.* Le module 807 de comparaison est agencé pour mettre en œuvre l'étape E43 du procédé de détection d'un mot-clé tel que décrit précédemment.

Le module d'obtention 804, le module 805 de couplage et d'assemblage, le module de couplage 806 et le module 807 de comparaison sont de préférence des modules logiciels comprenant des instructions logicielles pour mettre en œuvre les étapes du procédé de détection d'un mot-clé dans un flux tel que décrit précédemment.

L'invention concerne donc aussi :
- un programme d'ordinateur comportant des instructions pour la mise en œuvre du procédé de détection d'un mot-clé dans un flux tel que décrit précédemment lorsque ce programme est exécuté par un processeur du dispositif détection d'un mot-clé dans un flux,
- un support d'enregistrement lisible sur lequel est enregistré le programme d'ordinateur décrit ci-dessus.

L'invention porte également sur un système de chiffrement cherchable 100 qui comprend :
- un dispositif de génération de trappes 60, tel que décrit précédemment,
- au moins un dispositif de chiffrement cherchable 70, tel que décrit précédemment, et
- un dispositif 80 de détection d'un mot-clé dans un flux tel que décrit précédemment.

A noter que dans un exemple de réalisation où les dispositifs de génération de trappes 60, et de détection d'un mot-clé dans un flux 80 sont distincts, le module 606 d'envoi de trappe du dispositif de génération de trappes 60 est présent dans le système.

## Revendications

1. Procédé de génération de trappes dans un système de chiffrement cherchable, ledit système définissant une clé secrète et une clé publique, une trappe (T) étant associée à un mot-clé *(W)* comprenant *l* données élémentaires (*w*₁ ... *wₗ*), ladite trappe étant générée par :
- génération (E301) de *l* aléas (*v*₁*, v₂,* ..., *vₗ*),
- génération (E302) d'un polynôme (*V*) en un élément z, fonction de la clé secrète, et de degré *l*, un *j*-ième coefficient dudit polynôme, 1 ≤ *j* ≤ *l*, étant fonction d'un encodage de la *j-*ième donnée élémentaire (*wⱼ*) du mot-clé, ledit encodage étant défini pour chacune des données élémentaires dans la clé secrète, et d'un *j*-ième aléa (*vⱼ*) des 1-aléas, ladite trappe comprenant ledit polynôme (*h^{V}*) associé à un élément aléatoire d'un groupe *(h)* d'un environnement bilinéaire, et les *l* aléas (*h^{vⱼ}*) associés à l'élément aléatoire du groupe.

2. Procédé de chiffrement cherchable d'un système définissant une clé secrète et une clé publique, un chiffré (C) d'un flux de données *(B)* qui comprend *n* données élémentaires (*b*₁, *b₂,* ..., *bₙ*) comprenant :
- génération (E23) d'un aléa (*a*),
- pour toute donnée élémentaire *bⱼ, j =* 1 à *n*, génération (E24) d'un élément fonction de la clé publique (*g*^{*x*(*bⱼ*).*z^{j}*}) et de l'aléa, ladite clé publique étant associée à une clé secrète définissant un encodage pour chacune des données élémentaires, ledit élément étant associé à un élément aléatoire d'un groupe (*g*) d'un environnement bilinéaire, ledit élément associé à l'élément aléatoire du groupe formant une première donnée de chiffrement (*C*_{*j*,1}), et génération d'un facteur de décalage (*g^{a.z^{j-1}}*) fonction de l'aléa et de la clé publique, et associé à l'élément aléatoire du groupe, ledit facteur de décalage étant représentatif d'une position de ladite première donnée de chiffrement dans le flux chiffré (*C*), ledit facteur de décalage associé à l'élément aléatoire du groupe formant une deuxième donnée de chiffrement (*C*_{*j*,2}),
ledit chiffré (C) du flux de données comprenant pour tout *j* = 1 à *n*, les première et deuxième données de chiffrement, et
- génération d'une trappe (T) comprenant un polynôme (V) en un élément z, fonction de la clé secrète, et de degré 1, associé à un élément aléatoire du groupe (h), un j-ième coefficient dudit polynôme, 1 ≤ j ≤ 1, étant fonction d'un encodage d'une j- ième donnée élémentaire (w) d'un mot-clé (W), ledit encodage étant défini pour chacune des données élémentaires de la clé secrète, et d'un aléa parmi 1 aléas.

3. Procédé de détection d'un mot-clé (*W*) dans un chiffré (*C*) d'un flux de données (*B*) dans un système de chiffrement cherchable, ledit système définissant une clé secrète et une clé publique, ledit mot-clé comprenant *l* données élémentaires (*w*₁ ... *wₗ*)*,* le procédé comprenant :
- obtention (E40) d'une trappe (*T*) associée au mot-clé, ladite trappe comprenant *l* aléas (*h^{vᵢ}*) associés à un élément aléatoire (*h*) d'un groupe d'un environnement bilinéaire, et un polynôme (*V*) en un élément z, fonction de la clé secrète et de degré *l*, ledit polynôme étant associé à l'élément aléatoire du groupe (*h^{V}*)*,* un *i*-ième coefficient dudit polynôme, 1 ≤ *i* ≤ *l*, étant fonction d'un encodage de la *i*-ième donnée élémentaire (*wᵢ*) du mot-clé, ledit encodage étant défini pour chacune des données élémentaires dans la clé secrète, et d'un *i*-ième aléa (*vᵢ*) des *l* aléas,
- à partir d'une position courante *j*, et pour tout *i* = 1 à *l*, couplage (E41) du (*j* + *i*)-ième élément du chiffré et du *i*-ième aléa de la trappe au moyen d'une application bilinéaire (e), ladite application bilinéaire prenant en entrée un premier élément (*g*) d'un premier groupe (*G*1) et un deuxième élément (*h*) d'une deuxième groupe (*G*2) et à valeurs dans un troisième groupe *(GT),* et assemblage des *l* couplages obtenus, ledit assemblage produisant un premier polynôme de degré *l*,
- pour tout *i* = 1 à *l*, couplage (E42) du facteur de décalage associé à la position courante et du polynôme (*V*) associé à la trappe, ledit couplage produisant un deuxième polynôme (*U*) de degré *l*,
- comparaison (E43) des premier et deuxième polynômes, une égalité des deux polynômes étant représentative de la présence du mot-clé W dans le flux à partir de la position courante *j*.

4. Procédé de déchiffrement d'un chiffré (*C*) d'un flux de données (*B*), ledit flux de données comprenant *n* données élémentaires (*b*₁*, b*₂*, ..., bₙ*), le chiffré étant généré conformément au procédé de chiffrement cherchable selon la revendication 2, le procédé de déchiffrement comprenant :
- obtention (E50) d'une trappe associée à chacune des données élémentaires distinctes du flux de données, ladite trappe étant générée conformément au procédé de génération de trappes selon la revendication 1,
- détection (E52) de la présence de ladite trappe, conformément au procédé de détection de trappes selon la revendication 3.

5. Dispositif de génération de trappes (60) dans un système de chiffrement cherchable, ledit système définissant une clé secrète et une clé publique, une trappe (T) étant associée à un
mot-clé *(W)* comprenant *l* données élémentaires (*w*₁ ... *wₗ*), ladite entité comprenant :
- des premiers moyens de génération (604), agencés pour générer *l* aléas (v₁, *v₂, ..., vₗ*),
- des deuxièmes moyens de génération (605), agencés pour générer un polynôme (*V*) en un élément z, fonction de la clé secrète, et de degré *l*, un *j*-ième coefficient dudit polynôme, 1 ≤ *j* ≤ *l*, étant fonction d'un encodage de la *j*-ième donnée élémentaire (*wⱼ*) du mot-clé, ledit encodage étant défini pour chacune des données élémentaires dans la clé secrète, et d'un *j*-ième aléa (*vⱼ*) des 1-aléas, ladite trappe comprenant ledit polynôme (*h^{V}*) associé à un élément aléatoire d'un groupe *(h)* d'un environnement bilinéaire, et les *l* aléas (*h^{vⱼ}*) associés à l'élément aléatoire du groupe.

6. Programme pour une entité de génération de trappes dans un système de chiffrement cherchable, comprenant des instructions de code de programme destinées à commander l'exécution des étapes du procédé de génération de trappes selon la revendication 1, lorsque le programme est exécuté sur ladite entité.

7. Dispositif de chiffrement cherchable (70) d'un système définissant une clé secrète et une clé publique, un chiffré (C) d'un flux de données (*B*) qui comprend *n* données élémentaires (*b*₁*, b*₂*, ..., bₙ),* ladite entité comprenant :
- des premiers moyens de génération (704), agencés pour générer un aléa (a),
- des deuxièmes moyens de génération (705), agencés pour générer, pour toute donnée élémentaire *bⱼ, j* = 1 à *n*, un élément fonction de la clé publique *(g^{x(bⱼ),z^{j}}*) et de l'aléa, ladite clé publique étant associée à une clé secrète définissant un encodage pour chacune des données élémentaires, ledit élément étant associé à un élément aléatoire d'un groupe (*g*) d'un environnement bilinéaire, ledit élément associé à l'élément aléatoire du groupe formant une première donnée de chiffrement (*C*_{*j*,1}), et génération d'un facteur de décalage (*g*^{*a.z*^{*j*-1}}) fonction de l'aléa et de la clé publique, et associé à l'élément aléatoire du groupe, ledit facteur de décalage étant représentatif d'une position de ladite première donnée de chiffrement dans le flux chiffré (*C*), ledit facteur de décalage associé à l'élément aléatoire du groupe formant une deuxième donnée de chiffrement (*C*_{*j*,2}),
ledit chiffré (C) du flux de données comprenant pour tout *j* = 1 à *n*, les première et deuxième données de chiffrement, et
- des moyens de génération d'une trappe (T) comprenant un polynôme (V) en un élément z, fonction de la clé secrète, et de degré 1, associé à un élément aléatoire du groupe (h), un j-ième coefficient dudit polynôme, 1 ≤ j ≤ 1, étant fonction d'un encodage d'une j- ième donnée élémentaire (w) d'un mot-clé (W), ledit encodage étant défini pour chacune des données élémentaires de la clé secrète, et d'un aléa parmi 1 aléas.

8. Programme pour une entité de chiffrement cherchable, comprenant des instructions de code de programme destinées à commander l'exécution des étapes du procédé de chiffrement cherchable selon la revendication 2, lorsque le programme est exécuté sur ladite entité.

9. Dispositif (80) de détection d'un mot-clé (*W*) dans un chiffré (*C*) d'un flux de données (*B*) dans un système de chiffrement cherchable, ledit système définissant une clé secrète et une clé publique, ledit mot-clé comprenant *l* données élémentaires (*w*₁ ... *wₗ*), ladite entité comprenant :
- des moyens (804) d'obtention, agencés pour obtenir une trappe (*T*) associée au mot-clé, ladite trappe comprenant *l* aléas (*h^{vi}*) associés à un élément aléatoire *(h)* d'un groupe d'un environnement bilinéaire, et un polynôme (*V*) en un élément z, fonction de la clé secrète et de degré *l*, ledit polynôme étant associé à l'élément aléatoire du groupe (*h^{V}*)*,* un *i*-ième coefficient dudit polynôme, 1 ≤ *i* ≤ *l,* étant fonction d'un encodage de la *i*-ième donnée élémentaire (*wᵢ*) du mot-clé, ledit encodage étant défini pour chacune des données élémentaires dans la clé secrète, et d'un *i*-ième aléa (*vᵢ*) des *l* aléas,
- des moyens (805) de couplage et d'assemblage, agencés pour, à partir d'une position courante *j*, et pour tout *i* = 1 à *l*, calculer un couplage du (*j* + *i*)-ième élément du chiffré et du *i*-ième aléa de la trappe au moyen d'une application bilinéaire (*e*), ladite application bilinéaire prenant en entrée un premier élément aléatoire (*g*) d'un premier groupe (*G*1) et un deuxième élément aléatoire (*h*) d'une deuxième groupe (*G*2) et à valeurs dans un troisième groupe (*GT*)*,* et pour assembler les *l* couplages obtenus, ledit assemblage produisant un premier polynôme de degré *l*,
- des moyens (806) de couplage, agencés pour, pour tout *i* = 1 à *l*, calculer un couplage du facteur de décalage associé à la position courante et du polynôme (*V*) associé à la trappe, ledit couplage produisant un deuxième polynôme (*U*) de degré *l*,
- des moyens (807) de comparaison, agencés pour comparer les premier et deuxième polynômes, une égalité des deux polynômes étant représentative de la présence du mot-clé W dans le flux à partir de la position courante *j*.

10. Programme pour une entité de détection de la présence d'un mot-clé dans un chiffré, comprenant des instructions de code de programme destinées à commander l'exécution des étapes du procédé de détection de la présence d'un mot-clé dans un chiffré selon la revendication 3, lorsque le programme est exécuté sur ladite entité.

11. Système de chiffrement cherchable comprenant :
- un dispositif (60) de génération de trappes selon la revendication 5,
- un dispositif (70) de chiffrement cherchable selon la revendication7, et
- un dispositif (80) de détection de la présence d'un mot-clé dans un chiffré selon la revendication 9.

## Patentansprüche

1. Verfahren zur Erzeugung von Falltüren in einem System zur durchsuchbaren Verschlüsselung, wobei das System einen Geheimschlüssel und einen öffentlichen Schlüssel definiert, wobei eine Falltür (T) einem Schlüsselwort (*W*) zugeordnet ist, das *l* Elementardatenelemente (*w*₁*... wₗ*) umfasst, wobei die Falltür durch Folgendes erzeugt wird:
- Erzeugen (E301) von 1 Alias (*v*₁, *v*₂,..., *vₗ*),
- Erzeugen (E302) eines Polynoms (*V*) in einem Element z, das vom Geheimschlüssel abhängig und vom Grad *l* ist, wobei ein *j*-ter Koeffizient des Polynoms, 1 ≤ *j* ≤ *l*, von einer Codierung des *j*-ten Elementardatenelements (*w*ⱼ) des Schlüsselworts, wobei die Codierung für jedes der Elementardatenelemente im Geheimschlüssel definiert wird, und einem *j*-ten Alias (*vⱼ*) der l-Alias abhängig ist, die Falltür umfassend das Polynom (*h^{v}*)*,* das einem Zufallselement einer Gruppe (h) einer bilinearen Umgebung zugeordnet ist, und die *l* Alias (*h^{vj}*), die dem Zufallselement der Gruppe zugeordnet sind.

2. Verfahren zur durchsuchbaren Verschlüsselung eines Systems, das einen Geheimschlüssel und einen öffentlichen Schlüssel definiert, ein Chiffrat (C) eines Datenstroms (*B*), der *n* Elementardatenelemente (*b*₁*, b*₂*,..., b*ₙ) umfasst, umfassend:
- Erzeugen (E23) eines Alias (a),
- für jedes Elementardatenelement *bⱼ, j* = 1 bis *n,* Erzeugen (E24) eines Elements, das vom öffentlichen Schlüssel (*g^{x(bⱼ).z^{j}}*) und dem Alias abhängig ist, wobei der öffentliche Schlüssel einem Geheimschlüssel zugeordnet ist, der eine Codierung für jedes der Elementardatenelemente definiert, wobei das Element einem Zufallselement einer Gruppe (*g*) einer bilinearen Umgebung zugeordnet ist, wobei das Element, das dem Zufallselement der Gruppe zugeordnet ist, ein erstes Verschlüsselungsdatenlement (*C*_{*j*,1}) bildet, und Erzeugen eines Versatzfaktors (*g^{a.z^{j-1}}*), der vom Alias und dem öffentlichen Schlüssel abhängig ist und dem Zufallselement der Gruppe zugeordnet ist, wobei der Versatzfaktor für eine Position des ersten Verschlüsselungsdatenelements im verschlüsselten Strom (*C*) repräsentativ ist, wobei der Versatzfaktor, der dem Zufallselement der Gruppe zugeordnet ist, ein zweites Verschlüsselungsdatenelement (*C*_{*j*,2}) bildet, das Chiffrat (*C*) des Datenstroms umfassend für jedes *j* = 1 bis *n* das erste und zweite Verschlüsselungsdatenelement, und
- Erzeugen einer Falltür (T) umfassend ein Polynom (V) in einem Element z, das vom Geheimschlüssel abhängig und vom Grad l ist, das einem Zufallselement der Gruppe (h) zugeordnet ist, wobei ein j-ter Koeffizient des Polynoms, 1 ≤ j ≤ l, von einer Codierung eines j-ten Elementardatenelements (*wⱼ*) eines Schlüsselworts (W) abhängig ist, wobei die Codierung für jedes der Elementardatenelemente des Geheimschlüssels und von einem Alias von l Alias definiert wird.

3. Verfahren zur Feststellung eines Schlüsselworts (*W*) in einem Chiffrat (*C*) eines Datenstroms (*B*) in einem System zur durchsuchbaren Verschlüsselung, wobei das System einen Geheimschlüssel und einen öffentlichen Schlüssel definiert, das Schlüsselwort umfassend *l* Elementardatenelemente (w₁ ... w*ₗ*), das Verfahren umfassend:
- Beziehen (E40) einer Falltür (*T*) , die dem Schlüsselwort zugeordnet ist, die Falltür umfassend *l* Alias (*h^{vi}*), die einem Zufallselement (*h*) einer Gruppe einer bilinearen Umgebung zugeordnet sind, und ein Polynom (*V*) in einem Element *z*, das vom Geheimschlüssel abhängig und vom Grad *l* ist, wobei das Polynom dem Zufallselement der Gruppe (*h^{V}*) zugeordnet ist, wobei ein *i*-ter Koeffizient des Polynoms, 1 ≤ *i* ≤ *l*, von einer Codierung des *i*-ten Elementardatenelements (*wᵢ*) des Schlüsselworts, wobei die Codierung für jedes der Elementardatenelemente im Geheimschlüssel definiert wird, und von einem *i*-ten Alias (*vᵢ*) der *l* Alias abhängig ist,
- ausgehend von einer aktuellen Position *j*, und für jedes *i* = 1 bis *l*, Koppeln (E41) des (*j*+*i*)-ten Elements des Chiffrats und des *i*-ten Alias der Falltür mittels einer bilinearen Anwendung (*e*), wobei die bilineare Anwendung am Eingang ein erstes Element (*g*) einer ersten Gruppe (*G1*) und ein zweites Element (*h*) einer zweiten Gruppe (*G*2) und mit Werten in einer dritten Gruppe *(GT)* aufnimmt, und Zusammensetzen der *l* bezogenen Kopplungen, wobei das Zusammensetzen ein erstes Polynom vom Grad *l* erzeugt,
- für jedes *i* = 1 bis *l*, Koppeln (E42) des Versatzfaktors, der der aktuellen Position zugeordnet ist, und des Polynoms (*V*), das der Falltür zugeordnet ist, wobei das Koppeln ein zweites Polynom (*U*) vom Grad *l* erzeugt,
- Vergleichen (E43) des ersten und zweiten Polynoms, wobei eine Gleichheit der zwei Polynome für das Vorhandensein des Schlüsselworts W im Strom ausgehend von der aktuellen Position *j* repräsentativ ist.

4. Verfahren zur Entschlüsselung eines Chiffrats (*C*) eines Datenstroms (*B*), der Datenstrom umfassend n Elementardatenelemente (*b*₁*, b*₂*, ..., b*ₙ), wobei das Chiffrat entsprechend dem Verfahren zur durchsuchbaren Verschlüsselung nach Anspruch 2 erzeugt ist, das Entschlüsselungsverfahren umfassend:
- Beziehen (E50) einer Falltür, die jedem der verschiedenen Elementardatenelemente des Datenstroms zugeordnet ist, wobei die Falltür entsprechend dem Verfahren zur Erzeugung von Falltüren nach Anspruch 1 erzeugt wird,
- Feststellen (E52) des Vorhandenseins der Falltür entsprechend dem Verfahren zur Feststellung von Falltüren nach Anspruch 3.

5. Verfahren zur Erzeugung von Falltüren (60) in einem System zur durchsuchbaren Verschlüsselung, wobei das System einen Geheimschlüssel und einen öffentlichen Schlüssel definiert, wobei eine Falltür (T) einem Schlüsselwort (*W*) zugeordnet ist, das *l* Elementardatenelemente (*w*₁*... wₗ*) umfasst, die Einheit umfassend:
- erste Erzeugungsmittel (604), die angeordnet sind, *l* Alias (*v*₁, *v*₂, ..., *vₗ*) zu erzeugen,
- zweite Erzeugungsmittel (605), die angeordnet sind, ein Polynom (*V*) in einem Element *z*, das vom Geheimschlüssel abhängig und vom Grad *l* ist, zu erzeugen, wobei ein *j*-ter Koeffizient des Polynoms, 1 ≤ *j* ≤ *l*, von einer Codierung des *j*-ten Elementardatenelements (*wⱼ*) des Schlüsselworts, wobei die Codierung für jedes der Elementardatenelemente im Geheimschlüssel definiert wird, und einem *j*-ten Alias (*vⱼ*) der l-Alias abhängig ist, die Falltür umfassend das Polynom (*h^{V}*)*,* das einem Zufallselement einer Gruppe (*h*) einer bilinearen Umgebung zugeordnet ist, und die *l* Alias (*h^{vj}*), die dem Zufallselement der Gruppe zugeordnet sind.

6. Programm für eine Einheit zur Erzeugung von Falltüren in einem System zur durchsuchbaren Verschlüsselung, umfassend Programmcode-Anweisungen, die dazu bestimmt sind, die Ausführung der Schritte des Verfahrens zur Erzeugung von Falltüren nach Anspruch 1 zu steuern, wenn das Programm auf der Einheit ausgeführt wird.

7. Vorrichtung zur durchsuchbaren Verschlüsselung (70) eines Systems, das einen Geheimschlüssel und einen öffentlichen Schlüssel definiert, ein Chiffrat (C) eines Datenstroms (*B*), der n Elementardatenelemente (*b*₁*, b₂, b*ₙ) umfasst, die Einheit umfassend:
- erste Erzeugungsmittel (704), die angeordnet sind, ein Alias (*a*) zu erzeugen,
- zweite Erzeugungsmittel (705), die angeordnet sind, für jedes Elementardatenelement *bⱼ* = 1 bis *n* ein Element zu erzeugen, das vom öffentlichen Schlüssel (*g*^{*x*(*bⱼ*).*z^{j}*}) und dem Alias abhängig ist, wobei der öffentliche Schlüssel einem Geheimschlüssel zugeordnet ist, der eine Codierung für jedes der Elementardatenelemente definiert, wobei das Element einem Zufallselement einer Gruppe (*g*) einer bilinearen Umgebung zugeordnet ist, wobei das Element, das dem Zufallselement der Gruppe zugeordnet ist, ein erstes Verschlüsselungsdatenlement (*C*_{*j*,*1*}) bildet, und zum Erzeugen eines Versatzfaktors (*g*^{*a.z*^{*j*-1}}), der vom Alias und dem öffentlichen Schlüssel abhängig ist und dem Zufallselement der Gruppe zugeordnet ist, wobei der Versatzfaktor für eine Position des ersten Verschlüsselungsdatenelements im verschlüsselten Strom (*C*) repräsentativ ist, wobei der Versatzfaktor, der dem Zufallselement der Gruppe zugeordnet ist, ein zweites Verschlüsselungsdatenelement (*C*_{*j*,2}) bildet, das Chiffrat (*C*) des Datenstroms umfassend für jedes *j* = 1 bis *n* das erste und zweite Verschlüsselungsdatenelement, und
- Mittel zum Erzeugen einer Falltür (T) umfassend ein Polynom (V) in einem Element z, das vom Geheimschlüssel abhängig und vom Grad l ist, das einem Zufallselement der Gruppe (h) zugeordnet ist, wobei ein j-ter Koeffizient des Polynoms, 1, ≤ j ≤ l, von einer Codierung eines j-ten Elementardatenelements (*wⱼ*) eines Schlüsselworts (W) abhängig ist, wobei die Codierung für jedes der Elementardatenelemente des Geheimschlüssels und von einem Alias von l Alias definiert wird.

8. Programm für eine Einheit zur durchsuchbaren Verschlüsselung, umfassend Programmcode-Anweisungen, die dazu bestimmt sind, die Ausführung der Schritte des Verfahrens zur durchsuchbaren Verschlüsselung nach Anspruch 2 zu steuern, wenn das Programm auf der Einheit ausgeführt wird.

9. Vorrichtung (80) zur Feststellung eines Schlüsselworts (*W*) in einem Chiffrat (*C*) eines Datenstroms (*B*) in einem System zur durchsuchbaren Verschlüsselung, wobei das System einen Geheimschlüssel und einen öffentlichen Schlüssel definiert, das Schlüsselwort umfassend *l* Elementardatenelemente (*w*₁*... wₗ*), die Einheit umfassend:
- Bezugsmittel (804), die angeordnet sind, eine Falltür (*T*) zu beziehen, die dem Schlüsselwort zugeordnet ist, die Falltür umfassend *l* Alias (*h^{vi}*), die einem Zufallselement (*h*) einer Gruppe einer bilinearen Umgebung zugeordnet sind, und ein Polynom (*V*) in einem Element z, das vom Geheimschlüssel abhängig und vom Grad *l* ist, wobei das Polynom dem Zufallselement der Gruppe (*h^{V}*) zugeordnet ist, wobei ein *i*-ter Koeffizient des Polynoms, 1 ≤ *i* ≤ *l*, von einer Codierung des *i*-ten Elementardatenelements (*wᵢ*) des Schlüsselworts, wobei die Codierung für jedes der Elementardatenelemente im Geheimschlüssel definiert wird, und von einem *i*-ten Alias (*vᵢ*) der *l* Alias abhängig ist,
- Kopplungs- und Zusammensetzungsmittel (805), die angeordnet sind, ausgehend von einer aktuellen Position *j*, und für jedes *i* = 1 bis *l*, eine Kopplung des (*j+i*)-ten Elements des Chiffrats und des *i*-ten Alias der Falltür mittels einer bilinearen Anwendung (*e*) zu berechnen, wobei die bilineare Anwendung am Eingang ein erstes Zufallselement (*g*) einer ersten Gruppe (*G1*) und ein zweites Zufallselement (*h*) einer zweiten Gruppe (*G*2) und mit Werten in einer dritten Gruppe (*GT*) aufnimmt, und die *l* bezogenen Kopplungen zusammenzusetzen, wobei das Zusammensetzen ein erstes Polynom vom Grad *l* erzeugt,
- Kopplungsmittel (806), die angeordnet sind, für jedes *i* = 1 bis *l* eine Kopplung des Versatzfaktors, der der aktuellen Position zugeordnet ist, und des Polynoms (*V*), das der Falltür zugeordnet ist, zu berechnen, wobei die Kopplung ein zweites Polynom (*U*) vom Grad *l* erzeugt,
- Vergleichsmittel (807), die angeordnet sind, das erste und zweite Polynom zu vergleichen, wobei eine Gleichheit der zwei Polynome für das Vorhandensein des Schlüsselworts W im Strom ausgehend von der aktuellen Position *j* repräsentativ ist.

10. Programm für eine Einheit zur Feststellung des Vorhandenseins eines Schlüsselworts in einem Chiffrat, umfassend Programmcode-Anweisungen, die dazu bestimmt sind, die Ausführung der Schritte des Verfahrens zur Feststellung eines Schlüsselworts in einem Chiffrat nach Anspruch 3 zu steuern, wenn das Programm auf der Einheit ausgeführt wird.

11. System zur durchsuchbaren Verschlüsselung, umfassend:
- eine Vorrichtung (60) zur Erzeugung von Falltüren nach Anspruch 5,
- eine Vorrichtung (70) zur durchsuchbaren Verschlüsselung nach Anspruch 7, und
- eine Vorrichtung (80) zur Feststellung des Vorhandenseins eines Schlüsselworts in einem Chiffrat nach Anspruch 9.

## Claims

1. Method for generating trapdoors in a searchable encryption system, said system defining a secret key and a public key, a trapdoor (*T*) being associated with a keyword (*W*) comprising *l* elementary data (*w*, ... *wₗ*), said trapdoor being generated by:
- generation (E301) of *l* randoms (*v*₁,*v*₂,*...,vₗ*),
- generation (E302) of a polynomial (*V*) in an element z, dependent on the secret key, and of degree *l*, a *j*-th coefficient of said polynomial, 1 ≤ *j* ≤ *l*, being dependent on an encoding of the *j*-th elementary data item (*wⱼ*) of the keyword, said encoding being defined for each of the elementary data in the secret key, and of a *j*-th random (*vⱼ*) of the 1-randoms, said trapdoor comprising said polynomial (*h^{V}*) associated with a random element of a group (*h*) of a bilinear environment, and the *l* randoms (*h^{vi}*)associated with the random element of the group.

2. Searchable encryption method of a system defining a secret key and a public key, a ciphertext (C) of a data stream *(B)* which comprises *n* elementary data (*b*₁*,b*₂*,...,bₙ*) comprising:
- generation (E23) of a random (*a*),
- for any elementary data item *bⱼ,_{,}j* = 1 *to n,* generation (E24) of an element dependent on the public key (*g^{x(bⱼ}*)^{.}*^{z^{j}})* and the random, said public key being associated with a secret key defining an encoding for each of the elementary data, said element being associated with a random element of a group (*g*) of a bilinear environment, said element associated with the random element of the group forming a first encryption data item (*C*_{*j,*1}), and generation of a shift factor (*g*^{*a.*z^{*j*-1}}) dependent on the random and the public key, and associated with the random element of the group, said shift factor being representative of a position of said first encryption data item in the encrypted stream (*C*), said shift factor associated with the random element of the group forming a second encryption data item (*C*_{*j,*2}), said ciphertext (*C*) of the data stream comprising for any *j* = 1 *to n,* the first and second encryption data items, and
- generation of a trapdoor (*T*) comprising a polynomial (*V*) in an element z, dependent on the secret key, and of degree 1, associated with a random element of the group (*h*), a *j*-th coefficient of said polynomial, 1 ≤ *j* ≤ *l*, being dependent on an encoding of a *j*-th elementary data item (*wⱼ*) of a keyword (*W*), said encoding being defined for each of the elementary data of the secret key, and of a random of 1 randoms.

3. Method for detecting a keyword (*W*) in a ciphertext (*C*) of a data stream (*B*) in a searchable encryption system, said system defining a secret key and a public key, said keyword comprising *l* elementary data (*w*₁ ... *wₗ*), the method comprising:
- obtaining (E40) of a trapdoor (*T*) associated with the keyword, said trapdoor comprising *l* randoms (*h^{vi}*) associated with a random element (*h*) of a group of a bilinear environment, and a polynomial (*V*) in an element z, dependent on the secret key and of degree /, said polynomial being associated with the random element of the group (*h^{V}*)*,* an *i*-th coefficient of said polynomial, 1 ≤ *i* ≤ *l*, being dependent on an encoding of the *i*-th elementary data item (*wᵢ*) of the keyword, said encoding being defined for each of the elementary data in the secret key, and an *i*-th random (*vᵢ*) of the *l* randoms,
- starting from a current position *j*, and for any *i* = 1 *to l,* coupling (E41) of the (*j* +*i*)-th element of the ciphertext and of the *i*-th random of the trapdoor by means of a bilinear application (*e*), said bilinear application taking as input a first element (*g*) of a first group (*G*1) and a second element (*h*) of a second group (*G*2) and with values in a third group (*GT*), and assembling the *l* couplings obtained, said assembling producing a first polynomial of degree *l*,
- for any *i* = 1 *to l,* coupling (E42) of the shift factor associated with the current position and of the polynomial (*V*) associated with the trapdoor, said coupling producing a second polynomial (*U*) of degree *l*,
- comparison (E43) of the first and second polynomials, equality of the two polynomials being representative of the presence of the keyword W in the stream starting from the current position *j*.

4. Method for decrypting a ciphertext (*C*) of a data stream (*B*), said data stream comprising *n* elementary data (*b*₁ *b₂, ..., bₙ*)*,* the ciphertext being generated in accordance with the searchable encryption method according to Claim 2, the decryption method comprising:
- obtaining (E50) of a trapdoor associated with each of the distinct elementary data of the data stream, said trapdoor being generated in accordance with the method for generating trapdoors according to Claim 1,
- detection (E52) of the presence of said trapdoor, in accordance with the method for detecting trapdoors according to Claim 3.

5. Device for generating trapdoors (60) in a searchable encryption system, said system defining a secret key and a public key, a trapdoor (*T*) being associated with a keyword (*W*) comprising *l* elementary data (*w*₁ ... *wₗ*), said entity comprising:
- first generating means (604), designed to generate *l* randoms (*v*1, *v*₂,..., *vₗ*),
- second generating means (605), designed to generate a polynomial (*V*) in an element *z*, dependent on the secret key, and of degree /, a *j*-th coefficient of said polynomial, 1 ≤*j* ≤ *l*, being dependent on an encoding of the *j*-th elementary data item (*wⱼ*) of the keyword, said encoding being defined for each of the elementary data in the secret key, and a *j*-th random (*vⱼ*) of the 1-randoms, said trapdoor comprising said polynomial (*h^{V}*) associated with a random element of a group (*h*) of a bilinear environment, and the *l* randoms (*h^{vi}*)associated with the random element of the group.

6. Program for an entity for generating trapdoors in a searchable encryption system, comprising program code instructions intended to control the execution of the steps of the method for generating trapdoors according to Claim 1, when the program is executed on said entity.

7. Searchable encryption device (70) of a system defining a secret key and a public key, a ciphertext (C) of a data stream *(B)* which comprises *n* elementary data (*b₁,b₂,...,bₙ*)*,* said entity comprising:
- first generating means (704), designed to generate a random (*a*),
- second generating means (705), designed to generate, for any elementary data item *bⱼ, j =* 1 *to n,* an element dependent on the public key (*g^{x(bⱼ).z^{j}}*) and the random, said public key being associated with a secret key defining an encoding for each of the elementary data, said element being associated with a random element of a group (*g*) of a bilinear environment, said element associated with the random element of the group forming a first encryption data item (*Cj*,₁), and generation of a shift factor (*g*^{a.z^{*j*-1}}) dependent on the random and the public key, and associated with the random element of the group, said shift factor being representative of a position of said first encryption data item in the encrypted stream (*C*), said shift factor associated with the random element of the group forming a second encryption data item (*C*_{*j*,2}),
said ciphertext (*C*) of the data stream comprising for any *j =* 1 *to n,* the first and second encryption data items, and
- means for generation of a trapdoor (*T*) comprising a polynomial (*V*) in an element z, dependent on the secret key, and of degree 1, associated with a random element of the group (*h*), a *j*-th coefficient of said polynomial, 1 ≤ *j* ≤ *l*, being dependent on an encoding of a *j*-th elementary data item (*wⱼ*) of a keyword (*W*), said encoding being defined for each of the elementary data of the secret key, and of a random of 1 randoms.

8. Program for a searchable encryption entity, comprising program code instructions intended to control the execution of the steps of the searchable encryption method according to Claim 2, when the program is executed on said entity.

9. Device (80) for detecting a keyword (*W*) in a ciphertext (*C*) of a data stream (*B*) in a searchable encryption system, said system defining a secret key and a public key, said keyword comprising *l* elementary data (*w*₁...*wₗ*), said entity comprising:
- obtaining means (804), designed to obtain a trapdoor (*T*) associated with the keyword, said trapdoor comprising *l* randoms (*h^{vi}*) associated with a random element (*h*) of a group of a bilinear environment, and a polynomial (*V*) in an element *z*, dependent on the secret key and of degree *l*, said polynomial being associated with the random element of the group (*h^{V}*)*,* an *i*-th coefficient of said polynomial, 1 ≤ *i* ≤ *l*, being dependent on an encoding of the *i*-th elementary data item (*wᵢ*) of the keyword, said encoding being defined for each of the elementary data in the secret key, and an *i*-th random (*vᵢ*) of the *l* randoms,
- coupling and assembling means (805), designed to, starting from a current position *j,* and for any *i =* 1 *to l,* calculate a coupling of the (*j*+*i*)-th element of the ciphertext and of the *i*-th random of the trapdoor by means of a bilinear application (*e*), said bilinear application taking as input a first random element (*g*) of a first group (*G*1) and a second random element (*h*) of a second group (*G*2) and with values in a third group (*GT)*, and to assemble the *l* couplings obtained, said assembling producing a first polynomial of degree *l*,
- coupling means (806), designed to, for any *i* = 1 *to l,* calculate a coupling of the shift factor associated with the current position and of the polynomial (*V*) associated with the trapdoor, said coupling producing a second polynomial (*U*) of degree *l*,
- comparison means (807), designed to compare the first and second polynomials, equality of the two polynomials being representative of the presence of the keyword W in the stream starting from the current position *j*.

10. Program for an entity for detecting the presence of a keyword in a ciphertext, comprising program code instructions intended to control the execution of the steps of the method for detecting the presence of a keyword in a ciphertext according to Claim 3, when the program is executed on said entity.

11. Searchable encryption system comprising:
- a device (60) for generating trapdoors according to Claim 5,
- a searchable encryption device (70) according to Claim 7, and
- a device (80) for detecting the presence of a keyword in a ciphertext according to Claim 9.
